# FASCICULE DE BREVET EUROPEEN

(11) **EP 3 506 166 B1**
(45) Date de publication et mention de la délivrance du brevet: **03.12.2025**
(21) Numéro de dépôt: 18248236.4
(22) Date de dépôt: 28.12.2018
(51) Int. Cl.: G06V 20/52

(54) **PRÉDICTION DE DÉPLACEMENT ET DE TOPOLOGIE POUR UN RÉSEAU DE CAMÉRAS**
VORHERSAGE DER VERSCHIEBUNG UND TOPOLOGIE FÜR EIN KAMERANETZWERK
PREDICTION OF MOVEMENT AND TOPOLOGY FOR A NETWORK OF CAMERAS

(30) Priorité: 29.12.2017 FR 1763374
(43) Date de publication de la demande: 03.07.2019
(73) Titulaire: Bull SAS, 78340 Les Clayes-sous-Bois (FR)
(72) Inventeur: BOUZONNET, Loris, 38160 Chatte (FR); BOUKAMEL-DONNOU, Cécile, 38130 Echirolles (FR); PELLETIER, Benoît, 38960 SAINT ETIENNE DE CROSSEY (FR)
(74) Mandataire: Cabinet Camus Lebkiri

(56) Documents cités:
- EP-A1- 2 911 388
- WO-A1-2008/100359
- MARTINEL NIKI ET AL: "Camera Selection for Adaptive Human-Computer Interface", IEEE TRANSACTIONS ON SYSTEMS, MAN, AND CYBERNETICS: SYSTEMS, IEEE, PISCATAWAY, NJ, USA, vol. 44, no. 5, 1 May 2014 (2014-05-01), pages 653 - 664, XP011545555, ISSN: 2168-2216, [retrieved on 20140414], DOI: 10.1109/TSMC.2013.2279661
- NIKI MARTINEL ET AL: "Person Reidentification in a Distributed Camera Network Framework", IEEE TRANSACTIONS ON CYBERNETICS, vol. 47, no. 11, 1 November 2017 (2017-11-01), Piscataway, NJ, USA, pages 3530 - 3541, XP055513695, ISSN: 2168-2267, DOI: 10.1109/TCYB.2016.2568264
- WANG LITUAN ET AL: "Trajectory Predictor by Using Recurrent Neural Networks in Visual Tracking", IEEE TRANSACTIONS ON CYBERNETICS, IEEE, PISCATAWAY, NJ, USA, vol. 47, no. 10, 1 October 2017 (2017-10-01), pages 3172 - 3183, XP011660028, ISSN: 2168-2267, [retrieved on 20170905], DOI: 10.1109/TCYB.2017.2705345
- JULIAN BOCK ET AL: "Self-learning Trajectory Prediction with Recurrent Neural Networks at Intelligent Intersections :", PROCEEDINGS OF THE 3RD INTERNATIONAL CONFERENCE ON VEHICLE TECHNOLOGY AND INTELLIGENT TRANSPORT SYSTEMS, 1 January 2017 (2017-01-01), pages 346 - 351, XP055513707, ISBN: 978-989-7582-42-4, DOI: 10.5220/0006374003460351
- SHEN YANTAO ET AL: "Learning Deep Neural Networks for Vehicle Re-ID with Visual-spatio-Temporal Path Proposals", 2017 IEEE INTERNATIONAL CONFERENCE ON COMPUTER VISION (ICCV), IEEE, 22 October 2017 (2017-10-22), pages 1918 - 1927, XP033283053, DOI: 10.1109/ICCV.2017.210

## Description

### DOMAINE TECHNIQUE

La présente invention concerne le domaine de la surveillance en temps réel de site par caméra de vidéosurveillance. Par site surveillé par caméra de vidéosurveillance, on entend un site tel qu'une ville ou quartier ou encore un musée, un stade, un immeuble dont un ensemble de caméras de vidéosurveillance filme des zones du site. Cette technologie peut être adaptée à un système de surveillance utilisant plusieurs caméras avec des champs de vision croisés ou non croisés c'est-à-dire comprenant des zones dans le site hors champs de vision des caméras de vidéosurveillance.

L'invention concerne plus particulièrement un système de surveillance en temps réel de site, notamment des villes ou quartiers, accessible à distance au travers d'un réseau de communication. On notera qu'un tel réseau de communication désigne préférentiellement mais non limitativement un réseau informatique Intra- ou Internet.

### ETAT DE LA TECHNIQUE

L'état de la technique connaît déjà des systèmes de surveillance, en temps réel et à distance.

Il est connu aussi notamment des cartes de caméras de vidéosurveillance du site et des détecteurs pouvant détecter des cibles en mouvement ainsi que des fournisseurs de modèle d'apparence pouvant donner une signature à une cible par caméra et enregistrer une liste de caractéristiques de la cible.

Notamment, il est connu du fournisseur de modèle d'apparence de réaliser la reconnaissance de cible par le biais d'un réseau de neurones artificiel qui a appris à reconnaître une cible et lui attribuer une signature par caméra ainsi que des paramètres appelés aussi attributs. Cette reconnaissance de cible peut permettre à l'opérateur de lancer une recherche, sur l'ensemble des caméras de vidéosurveillance, une reconnaissance de la cible lorsque la cible est sortie d'une zone de surveillance.

De tels systèmes sont divulgués par exemple dans les documents EP 2 911 388 A1 et WO 2008/100359 A1.

L'inconvénient est que cette recherche peut être longue dans le cas d'un grand nombre de caméras mais aussi de la nécessité que la cible soit déjà apparue sur une des caméras de vidéosurveillance.

L'inconvénient de la carte des caméras en outre réside aussi dans la topologie de caméra. En effet, une caméra peut être défaillante ou encore si une zone du site est non couverte par les caméras de surveillance, il peut être difficile de savoir dans le cas où la cible se rend dans cette zone non couverte, sur quelle caméra la cible peut réapparaître.

Il y a un besoin pour les opérateurs d'avoir un système plus efficace pour pouvoir suivre une cible afin de pouvoir par exemple intercepter la cible.

### RÉSUMÉ DE L'INVENTION

La présente invention a pour but de pallier les inconvénients de l'état de la technique en proposant une surveillance en temps-réel d'au moins une cible par le biais d'un réseau de neurones artificiel de prédiction apprenant la topologie de caméra ainsi que statistiquement les caméras pouvant probablement permettre d'identifier la cible lors d'une sortie d'une zone filmée par une caméra de surveillance.

Pour ce faire, l'invention a pour objet un système de surveillance en temps réel comprenant des caméras de vidéosurveillances, le système de surveillance étant défini par la revendication 1.

Ainsi, l'opérateur peut connaître la caméra probable suivante à afficher. Le réseau de neurones artificiel de prédiction peut apprendre la topologie de caméra et proposer une caméra ou une liste de caméra dont la cible va apparaître probablement.

Contrairement à une machine vectorielle de support, plus connu sous l'acronyme SVM pour Support Vector Machine, le réseau de neurones artificiel de prédiction permet d'être plus simple, et un apprentissage en temps réel permettant d'être plus précis et plus rapide et spécialement s'il y a de nombreuses classes.

Par exemple, le réseau de neurones artificiel de prédiction peut apprendre continuellement ou de temps en temps en recevant des cibles leurs positions et les identifications de caméra de vidéosurveillance filmant ces cibles et recevoir ensuite l'identification de la caméra sur laquelle la cible a été détectée permettant ainsi au réseau de neurones artificiel de prédiction un apprentissage incrémentiel de la topologie du réseau de caméra.

Cela permet ainsi au réseau de neurones artificiel de prédiction d'apprendre et ainsi pouvoir déterminer en fonction d'une position d'une cible la caméra probable suivante dans laquelle la cible sera détectée.

Selon un exemple, le module de gestion de caméras reçoit un ensemble de données de cible de plusieurs logiciels de poursuite et en ce que le module est apte à faire la corrélation, par le biais des signatures, du déplacement d'une cible d'un champ de vision d'une caméra à un champ de vision d'une autre caméra pour pouvoir transmettre au réseau de neurones artificiel de prédiction pour son apprentissage incrémentiel.

La cible peut avoir une signature par caméra. La signature d'une caméra et la signature d'une autre caméra du même individu sera assez proche l'une de l'autre pour que le module de gestion de caméra puisse faire la corrélation entre les deux caméras et ainsi reconnaître la cible.

Autrement dit, du fait des signatures pour chaque cible sur une image d'une première caméra puis ensuite de d'autres signatures sur une autre image d'une deuxième caméra etc..., le module de gestion de caméra peut faire la corrélation entre deux signatures proches pour identifier une même cible et ainsi du chemin emprunté par la cible entre cette première caméra et cette deuxième caméra. Ainsi, le module peut utiliser ces données pour réaliser un apprentissage incrémentiel au réseau de neurones artificiel en lui envoyant au moins :
L'identification de la première caméra,
La position à l'état de sortie ou la dernière position de la cible dans la première caméra,
L'identification de la deuxième caméra.

Afin d'améliorer la probabilité, le module peut envoyer en outre :
La classe de la cible ou/et, la direction de la cible ou/et la vitesse de la cible.

Le module de gestion de caméras de surveillance reçoit en outre des données de direction et sens de la cible et en ce que les données de cible pour prédiction envoyées au réseau de neurones artificiel de prédiction comprennent en outre ces données de direction à l'état de sortie.

Cela permet d'améliorer les probabilités que la caméra la plus probable identifiée par le réseau de neurones artificiel de prédiction identifie la cible dans son champ de vision.

Selon un mode de réalisation, le module de gestion de caméras de surveillance reçoit en outre des données de vitesse de la cible et en ce que les données de cible pour prédiction envoyées au réseau de neurones artificiel de prédiction comprennent en outre ces données de direction à l'état de sortie.

Cela permet d'améliorer les probabilités que la caméra la plus probable identifiée par le réseau de neurones artificiel de prédiction identifie la cible dans son champ de vision.

Selon un mode de réalisation, le module de gestion de caméras de surveillance reçoit en outre des données de classe de la cible et en ce que les données de cible pour prédiction envoyées au réseau de neurones artificiel de prédiction comprennent en outre ces données de classe à l'état de sortie, la classe de la cible pouvant être un piéton, un deux roues, un véhicule à quatre roues ou autre.

Selon un exemple de ce mode de réalisation, la classe du véhicule à quatre roues est sous classifiée en voiture ou en camion.

Ainsi, pour un site tel qu'un quartier ou une route, le fait d'apprendre au réseau de neurones artificiel de prédiction les chemins probables par cible permet d'améliorer efficacement les probabilités que la caméra la plus probable identifiée par le réseau de neurones artificiel de prédiction identifie la cible dans son champ de vision.

Selon un mode de réalisation, l'état de la cible dans la zone surveillée par la caméra pouvant être en outre un état actif dans lequel la cible est dans une zone du champ de vision entourée par la zone de sortie.

Autrement dit, la cible après avoir été à l'état nouveau passe à l'état actif dés lors que le logiciel de poursuite à reçu la signature de la cible par le fournisseur de modèle d'apparence et en ce que dés lors que la cible rentre dans une zone du champ de vision de la caméra qui peut permettre à la cible d'être sur le point de sortir du champ de vision de la caméra, la cible passe à l'état de sortie.

Bien entendu, le logiciel de poursuite peut ajouter des zones de sortie au milieu du champ de vision de la caméra lorsqu'il détecte une zone de disparition de cible. C'est notamment le cas, par exemple lorsqu'il y a une entrée de tunnel au milieu d'une route.

Cela permet à l'opérateur de pouvoir avoir des statistiques du chemin que peut emprunter la cible. Ainsi, il est probable d'envoyer des personnes, par exemple la police, intercepter la cible plus rapidement et ainsi éviter une course poursuite.

Selon un mode de réalisation, le module de gestion de caméras de surveillance est apte à recevoir une requête de demande de prédiction d'une cible, et en ce que le réseau de neurones artificiel de prédiction peut envoyer à sa sortie une liste d'identifications de caméras par probabilité et en ce que le module de gestion de caméras de surveillance est apte en outre à envoyer à la machine d'interface l'identification de la caméra dont la cible est à l'état actif et une liste ordonnée par probabilité des identifications de caméras probable possible.

La requête de demande de prédiction peut être réalisé par une sélection d'un opérateur sur une vidéo d'une caméra affiché sur un écran.

La requête peut aussi être réalisée par une image de la cible envoyée au module de gestion de caméra qui peut interroger le fournisseur de modèle d'apparence directement pour recevoir une ou des signatures probables de cible filmé par une ou des caméras.

En outre la requête peut aussi être une requête d'attributs, par exemple classe = piéton, couleur vêtement haut = rouge, couleur cheveux etc... et ainsi sélectionner un nombre de cible probable filmé par les caméras.

Selon un mode de réalisation, le module de gestion de caméras de surveillance est apte à ajouter sur une zone de la vidéo dont la cible est identifiée à l'état actif ou à l'état de sortie, une vidéo filmée par une caméra probable identifiée par le réseau de neurones artificiel de prédiction.

Selon un mode de réalisation, le module de gestion de caméras de surveillance est apte à envoyer une liste de Nœud de caméra de surveillance ainsi que le chemin de la cible de la première caméra ayant identifié la cible à la caméra la plus probable de la cible et par exemple une autre caractéristique telle que la classe, le poids des chemins entre les caméras.

Par exemple, le poids peut être calculé par classe par caméra.

Cela permet de connaître les chemins les plus fréquentés pour une classe donnée. Ceci peut permettre au service d'agglomération d'une ville de connaître par exemple les routes les plus fréquentées et donc celles qui ont potentiellement le plus besoin de maintenance. En outre, cela peut permettre aussi de connaître le trafic en temps réel.

Selon un mode de réalisation, le module de gestion et le réseau de neurone prédicteur sont dans un même ordinateur ou séparément connectés par un réseau public ou privé ou dans un même serveur ou des serveurs séparés. Le réseau de neurones artificiel utilisé est par exemple de type perceptron multicouches à des fin de classification par exemple MLPCclassifier^{®} de la librairie Scikit Learn ^{®}. Le réseau de neurones de prédiction peut être à apprentissage profond (deep learning).

Par exemple, le réseau de neurone artificiel comprend une couche d'entrée comprenant des neurones ayant une fonction d'activation de type unité linéaire rectifiée appelée aussi « ReLU » acronyme de l'anglais (Rectifed Linear Unit), dont au moins un neurone de position et un neurone d'identification de caméra, une couche cachée comprenant des neurones ayant une fonction d'activation par exemple de type unité linéaire rectifiée et une couche de sortie comprenant au moins un neurone ayant une fonction d'activation de couche de perte, appelée aussi Softmax, pour prédire la caméra de surveillance.

La couche d'entrée peut comprendre par exemple neuf neurones d'activation. La couche d'entrée peut comprendre par exemple un neurone concernant la classe de la cible (piéton, voiture, camion, car, animaux, bicycle etc..), quatre neurones concernant la position de la cible (par exemple deux positions de la cible dans l'image selon deux axes et deux positions de la caméra de surveillance si celle-ci est mobile), deux neurones concernant le sens de la cible dans l'image selon les deux axes, un neurone pour la vitesse de la cible dans l'image et un neurone pour l'identification de la caméra, soit neuf variables.

La couche cachée peut comprendre par exemple cent neurones ayant la fonction d'activation de type unité linéaire rectifiée.

La couche de sortie peut comprendre un neurone par probabilité de caméra identifié ayant les plus grandes probabilités d'apparition de la cible. Par exemple la couche de sortie comprend cinq neurones de sortie pour cinq probabilités de cinq caméras de surveillance identifiées ayant les plus grandes probabilités d'apparition de la cible.

Selon un mode de réalisation, le système comprend en outre un ensemble de logiciel de poursuite de cible par caméra de surveillance. Les logiciels de poursuite de cible peuvent être sur un ou plusieurs organes informatiques tel qu'un ordinateur.

Le logiciel de poursuite de cible étant apte à suivre la cible et en déduire la direction et la vitesse de la cible, d'identifier l'état de la cible et d'envoyer au module de gestion de caméras de surveillance les données de cible comprenant la direction, la vitesse, la position, l'état de la cible et la signature de la cible.

Selon un exemple de ce mode de réalisation, le système comprend en outre un détecteur permettant d'extraire une image de cible de la vidéo, de réaliser une reconnaissance d'image pour attribuer la classe de la cible, et d'envoyer à l'ensemble de logiciel de poursuite l'image extraite ainsi que sa classe. Le logiciel de poursuite envoie donc le flux de vidéo au détecteur.

Selon un exemple, le détecteur identifie dans l'image la position de la cible dans le champ de vision.

Selon un autre exemple, c'est le logiciel de poursuite de cible qui permet d'identifier la position de la cible dans le champ de vision.

Selon un exemple de ce mode de réalisation, le système comprend un fournisseur de modèle d'apparence permettant :
de recevoir l'image extraite par le détecteur ainsi que sa classe,
de donner une signature à la cible pour une caméra,
d'identifier un certain nombre de caractéristiques de la cible tel que la couleur etc...
de stocker dans une mémoire les caractéristiques et la signature de la cible,
et enfin d'envoyer à l'ensemble de logiciel de poursuite la signature correspondant à l'image reçue.

Selon un exemple de ce mode de réalisation, l'ensemble de logiciel de poursuite transmet au module de gestion de caméras de surveillance la signature, la vitesse, la direction, la classe et l'état de la cible.

Selon un exemple de ce mode de réalisation, le fournisseur de modèle d'apparence utilise un composant de réidentification utilisant un réseau de neurone de type RESNET 50 pour réaliser l'extraction de signature des cibles détectées et reconnaitre ainsi à partir des caractéristiques de la cible sur une image une signature et en outre identifier et extraire des caractéristiques de la cibles appelés aussi attributs.

La signature peut être représentée comme un vecteur de points flottants. Le fournisseur de modèle d'apparence peut ensuite, pour une image de la cible provenant d'une caméra, rechercher dans une base de données une similarité avec une signature d'une image précédente d'une autre caméra. La recherche de similarité de deux signatures peut être calculée par la distance cosinus minimal entre deux signatures de deux images de deux différentes caméras.

Le fournisseur de modèle peut par exemple envoyer la dernière signature calculée par exemple avec un lien avec la première signature similaire identifiée au logiciel traceur pour l'informer que ces deux signatures sont la même cible.

Ainsi, il permet de réidentifier la cible lorsque celle-ci est à l'état nouveau dans un champ de vision d'une caméra.

Ainsi, le fournisseur de modèle d'apparence peut enregistrer et reconnaitre la cible dans une même caméra mais peut aussi le faire d'une caméra à une autre.

Selon un mode de réalisation, le système comprend en outre un logiciel détecteur permettant d'identifier des cibles en mouvement sur une vidéo d'une caméra et en ce que le détecteur isole la cible par exemple en découpant un rectangle dans la vidéo.

Selon un exemple de ce mode de réalisation et du mode de réalisation précédent, le détecteur comprend un réseau de neurones artificiel de reconnaissance de cible apte à réaliser une reconnaissance d'image pour identifier la classe de la cible, la cible pouvant être un piéton, un deux roues, un véhicule à quatre roues tel qu'un camion ou une voiture ou autres.

La cible deux roues peut comprendre deux sous cibles comprenant une sous cible vélo et une sous cible motocycle.

Dans « autre », la cible peut être par exemple, un piéton utilisant un moyen de locomotion tel que des rouleurs, une trottinette etc...

Selon un exemple le détecteur peut comprendre un algorithme d'extraction de caractéristiques pour faire une abstraction de l'image pour envoyer en entrée au réseau de neurones artificiel de reconnaissance de cible.

Selon un autre exemple, le détecteur comprend un réseau de neurones à convolution de type SSD de l'anglais « Single Shot multiBox Detector ».

L'invention concerne aussi un procédé de suivi d'une cible utilisant un système de surveillance, le procédé étant défini par la revendication 8.

Selon un mode de réalisation, le procédé peut comprendre en outre :
Une étape de création d'une liste d'identification de caméra probable avec leur probabilité de succès et l'ajout sur la caméra d'un nombre d'identification de caméra probable avec leur probabilité.

Selon un mode de réalisation, le procédé comprend :
Une étape de réception d'un ensemble de données de l'ensemble des logiciels de poursuite de cible,
Une étape d'identification d'un passage de la cible d'un champ de vision d'une caméra à un autre champ de vision d'une autre caméra en comparant les signatures,
Une étape d'apprentissage incrémentiel du réseau de neurones artificiel de prédiction à partir de la dernière position sur le champ de vision de la caméra précédente ainsi que l'identification de la caméra précédente et l'identification de la caméra ayant une image représentant la même cible par exemple en recevant une information que la signature sur la cible à l'état nouveau est proche d'une signature de cible à l'état de sortie de la caméra précédente.

Par proche, le système peut avoir une distance minimale entre les deux signatures pour accepter les deux signatures comme similaires par exemple pour l'apprentissage par incrémentation. Par exemple on peut utiliser pour chaque classe des cibles ayant des attributs rares (distinctif) afin que les deux signatures de la même classe dans deux caméras soient éloignées de d'autres signatures de d'autres cibles. Par exemple, l'apprentissage incrémentiel pour une classe de piéton peut être réalisée avec des signatures, éloignées des autres signatures de d'autres individus, représentatif par exemple d'un piéton portant un haut et un bas rouge facilement reconnaissable par rapport aux autres piétons.

Cela permet ainsi au module de gestion de caméra de réaliser un apprentissage incrémentiel à partir de cible ayant une forte probabilité que ce soit le même individu c'est-à-dire même voiture ou même camion ou même piéton etc...

Selon un exemple de ce mode de réalisation, l'étape d'apprentissage incrémentiel comprend en outre en information d'entrée la dernière direction et la dernière vitesse de la cible reçue dans la caméra précédente.

Selon un exemple de ce procédé, le procédé comprend en outre :
- une étape de détection d'une cible à l'état nouveau par le logiciel de poursuite (cible rentrant dans le champ de vision de la caméra),
- une étape d'envoi d'une image du flux de vidéo comprenant la cible à l'état nouveau au détecteur,
- une étape de détection de la classe et de la position de la cible dans le champ de vision de la caméra de surveillance,
- une étape d'envoi de la position de la cible dans l'image reçu ainsi que de la classe de la cible au logiciel de poursuite et d'une image de la cible,
- une étape d'envoi à un fournisseur de modèle d'apparence d'une image de la cible,
- une étape de signature de la cible, permettant de donner une identification à la cible,
- une étape d'envoi au module de gestion de caméras de la position, de la classe, de la signature et de l'état nouveau de la cible,
- une étape de détection de la cible à l'état de sortie,
- une étape d'envoi de l'image de la cible à l'état de sortie au détecteur,
- une étape de détermination de la position de la cible dans le champ de vision de la caméra de surveillance,
- une étape d'envoi au module de gestion de caméras de la position, de la classe, de la signature et de l'état de sortie de la cible.

Dans un exemple du mode de réalisation précédent, le procédé peut comprendre en outre une étape de calcul de la direction et de la vitesse de la cible à l'état de sortie en fonction des positions et la date comprenant l'heure de la cible de l'état nouveau à l'état de sortie.

Selon un autre exemple, c'est le module de gestion de caméras qui calcule la vitesse et la direction et en ce qu'il reçoit la date (comprenant l'heure) pour chaque état de la cible et position.

Selon un mode de réalisation, le procédé comprend une succession d'envoi d'image du logiciel de poursuite et une succession de réception de la position de la cible de l'état nouveau à l'état de sortie de la cible. (C'est-à-dire aussi à l'état new).

Cela permet d'être plus précis sur la vitesse et la direction de la cible. En effet, cela permet de prendre en compte les changements de direction de la cible ainsi que des ralentissements voir des pauses ou accélérations de la cible se déplaçant dans le champ de vision de la caméra.

Selon un mode de réalisation, le procédé comprend une étape d'enregistrement de caractéristique de la cible déterminée par le fournisseur de modèle d'apparence et d'enregistrement de la signature et des caractéristiques de la cible pour pouvoir réidentifier la cible avec une autre image d'un autre profil de la cible notamment une image de la cible d'une autre caméra ayant une autre signature mais proche de la signature enregistrée précédemment.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention. Les figures montrent :
- la figure 1, représente une architecture selon un mode de réalisation de l'invention
- la figure 2 représente un diagramme du flux d'image selon un mode de réalisation de l'invention ;
- la figure 3 représente schématiquement un cycle d'état d'un cycle dans un champ de vision d'une caméra ;
- la figure 4 représente un schéma de principe d'un exemple d'un réseau de neurones artificiel de prédiction.

### DESCRIPTION DES FORMES DE REALISATION PREFEREES DE L'INVENTION

Les différents éléments apparaissant sur plusieurs figures auront gardé, sauf précision contraire, la même référence.

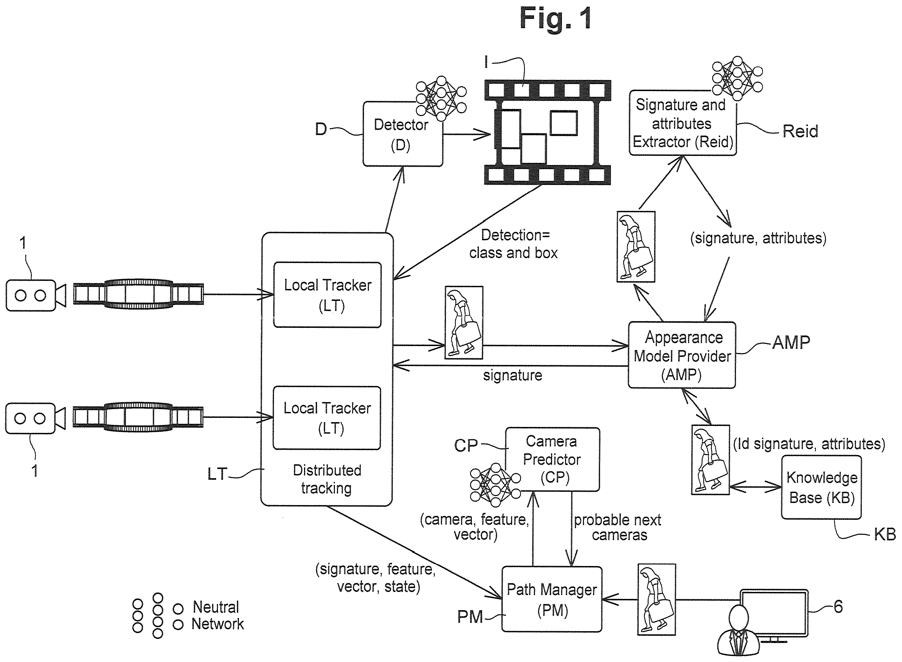

La figure 1 représente une architecture d'un système de surveillance d'un mode de réalisation de l'invention.

Le système de surveillance permet de surveiller en temps réel un site comprenant des caméras de vidéosurveillances Xn (n étant le nombre de caméra X). En l'occurrence seulement 2 caméras X1 et X2 sont représentées pour des raisons de simplicité mais l'invention concerne un Nœud de caméra comprenant plusieurs dizaines voire des centaines de caméra de vidéosurveillance X.

Le système de surveillance comprend en outre des logiciels de poursuite de cible LT, en l'occurrence un logiciel de poursuite LT par caméra de vidéosurveillance 1.

Ces logiciels de poursuite de cible LT peuvent être regroupés dans une machine telle qu'un ordinateur ou être dispatchés, par exemple dans chacune des caméras.

Le système de surveillance comprend au moins un module de gestion PM de caméras de surveillance 1Xayant au moins une entrée pour recevoir des données des caméras de vidéosurveillance X provenant de l'ensemble des logiciels de poursuite de cible LT.

Les données envoyées au module de gestion PM comprend au moins une identification d'une des caméras X réalisant une vidéo sur une zone surveillée du site, au moins une signature correspondant à une cible mobile détectée sur la vidéo ainsi que la position de la cible dans la video et au moins un état de la cible dans la zone surveillée par la caméra.

Par signature on entend une identification de la cible, permettant de retrouver la cible dans une autre caméra. La désignation de la signature et l'identification de la même cible dans une autre caméra sont expliquées plus en détail après.

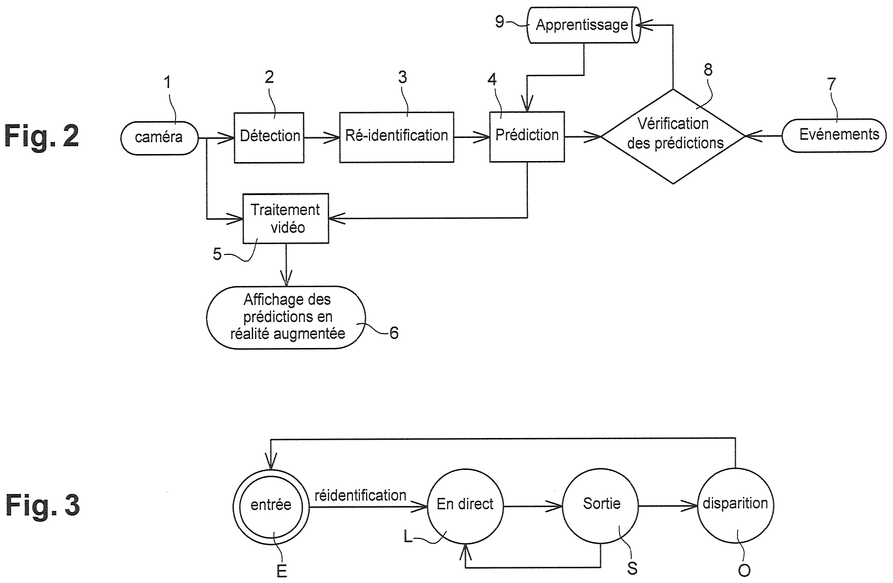

La figure 3 représente les différents états de la cible.

L'état de la cible peut être un état d'entrée E, cet état est mis sur la cible lorsque la cible vient d'entrer dans le champ de vision de la caméra X1.

L'état de la cible peut en outre être actif L, c'est l'état dans lequel la cible est dans le champ de vision de la caméra après que la cible à l'état d'entrée E ait été envoyée au module de gestion de caméra.

L'état de la cible peut aussi être dans un état de sortie S, c'est l'état dans lequel la cible est dans une extrémité du champ de vision. Par exemple, dans les 10% du champ de vision de la caméra entourant donc les 90% du champ de vision à l'état actif A.

Enfin, la cible peut être dans un état de disparition O, lorsque la cible est sortie du champ de vision de la caméra (qu'elle n'apparaît plus sur la vidéo).

La position de la cible peut être identifiée par exemple par des coordonnées dans un plan du champ de vision de la caméra (selon une abscisse et une ordonnée dans le champ de vision). Si la caméra est mobile, l'angle de la caméra peut en outre être ajouté aux coordonnées pour donner une position de la cible dans le champ de vision.

Il est évident, que dans le cas où la cible est à l'état de disparition O, soit le logiciel de poursuite LT n'envoie pas de position, soit envoie la position enregistrée à l'état de sortie S ou une position proche de cette dernière si la cible s'est mue entre sa position envoyée à l'état de sortie et sa dernière position identifiée.

Dans cet exemple, la position de la cible est définie par un composant de détection, appelé aussi détecteur D dans la suite.

Le système de surveillance comprend en outre un réseau de neurones artificiel de prédiction CP de localisation d'une cible dans une zone surveillée par une caméra X1. Ce réseau de neurones de prédiction CP est connecté au module de gestion PM. Le réseau de neurones de prédiction CP comprend une entrée d'acquisition d'information de cible. Notamment les données envoyées au réseau de neurones de prédiction CP comprennent les données d'identification de la caméra dans laquelle une cible a été détectée ainsi que les données de position à l'état de sortie indiquant le positionnement de la cible à l'état de sortie avant le passage à l'état de disparition.

Le réseau de neurones de prédiction CP peut être par exemple un réseau de neurone de type perceptron multicouches à des fins de classification en l'occurrence MLPCClassifier de la librairie Scikirt Learn.

Le réseau de neurones de prédiction CP comprend une sortie, d'au moins une identification d'une caméra probable dont la cible sera probablement identifiée, connectée au module de gestion de caméra PM. Le module de gestion de caméras PM comprend une sortie pour transmettre l'au moins une identification de caméra probable à un organe d'interface homme machine 6 comprenant un écran tel qu'un ordinateur.

En outre, le module de gestion de caméras peut transmettre la vidéo de la caméra de prédiction.

En l'occurrence, dans ce mode de réalisation, le réseau de neurones de prédiction CP reçoit d'autres données de la cible. En l'occurrence, il reçoit des données de direction et/ou de sens de la cible du module de gestion de caméras PM ainsi que des données de vitesse.

Les données de direction et de vitesse de la cible sont en l'occurrence calculées par le module de gestion de caméras PM.

En outre dans cet exemple, le réseau de neurones de prédiction reçoit en entrée des données de classe de la cible provenant du module de gestion de caméras PM.

La classe d'une cible est déterminée par le détecteur D qui transmet la classe de la cible au logiciel de poursuite LT.

Autrement dit, le détecteur D permet de fournir la position et la classe d'une cible dans une image. En l'occurrence, le détecteur D est capable de fournir la position et la classe pour plusieurs cibles dans une image.

Le détecteur D peut être un unique logiciel pour l'ensemble des logiciels de poursuite LT ou peut être dupliqué pour fonctionner chacun avec une quantité de logiciel de poursuite prédéterminée.

Le détecteur D comprend un réseau de neurones en l'occurrence convolutionnel de type SSD. Ce réseau de neurones qui a subit un apprentissage permet de déterminer pour chaque cible dans une image reçue la classe et la position. La classe peut en l'occurrence dans cet exemple être soit un piéton, un deux roues, une automobile ou encore un Camion. Il peut y avoir d'autres classes telles qu'un bus, un taxi, ou encore un tuk-tuk. Le détecteur D peut en outre découper la cible dans l'image, en l'occurrence, il peut découper plusieurs cibles dans des rectangles. Cela est notamment représenté schématiquement sur figure 1 sous la représentation d'un film I.

Dans la suite, un exemple d'une cible va être décrit, en l'occurrence ayant une classe dite « piéton ».

Le logiciel de poursuite LT transfert les images découpées et donc en l'occurrence l'image découpée de la cible « piéton » à un fournisseur de modèle d'apparence AMP.

C'est ce fournisseur de modèle d'apparence AMP, appelé dans la suite fournisseur AMP qui va transmettre, au logiciel de poursuite LT, la signature de la cible. Le fournisseur AMP utilise un composant de ré-identification Reid comprenant en l'occurrence un réseau de neurones en l'occurrence de type ResNet 50 mais pourrait aussi utiliser un algorithme par acquisition de données. Le fournisseur AMP envoie l'image de la cible au composant de ré-identification Reid qui calcule une signature de la cible selon des mesures sur l'image de la cible. Cela permettra dans la suite de réidentifier la cible par corrélation de deux signatures dans une autre image reçue dans une autre caméra.

Dans cet exemple, le composant de ré-identification Reid fourni au fournisseur AMP en outre des informations mesurées sur la cible appelées aussi « attributs », telles que par exemple pour un piéton la couleur d'un haut ou d'un bas d'un piéton, le type de cheveux (bruns ou blonds ou roux) et d'autres caractéristiques... Pour une voiture, cela peut être la couleur de la voiture, la hauteur etc... et si possible la lecture de la plaque de la voiture.

Ainsi, dans l'exemple de la figure 1, de l'image de la cible, provenant de la caméra X1 ayant une classe piéton visible, envoyée au fournisseur AMP par le logiciel de poursuite, le composant de réidentification Reid détermine en l'occurrence que le piéton est une femme brune en robe rouge d'une taille grande et portant un sac à main beige d'une taille compris entre 30*40cm et 35*45cm. Le composant Reid calcule une signature de cette cible à partir de mesure de la cible et identifie en outre des caractéristiques (attributs). Le fournisseur AMP enregistre ensuite dans la base de données les caractéristiques (attributs) et la signature de la cible. La signature peut être représentée comme un vecteur de nombres flottants.

Le fournisseur de modèle d'apparence AMP ou le composant de ré identification peut ensuite rechercher dans une base de données une similarité avec une signature d'une image précédente d'une autre caméra. La recherche de similarité de deux signatures peut être calculée par exemple par la distance cosinus minimale entre deux signatures de deux images de deux différentes caméras. Dans cet exemple de l'image du piéton provenant de la caméra X1, le fournisseur trouve une signature d'une cible provenant d'une caméra X2 similaire enregistrée dans la base de données par exemple 3 minutes avant. Par exemple, la signature est différente du fait que la taille identifiée est moyenne. Le fournisseur AMP connaissant le fait qu'une cible peut passer d'une taille grande à moyenne et vice versa lorsque celle-ci est proche de la borne séparant les deux tailles du fait des écarts de mesures possible en déduit une similarité de ces deux signatures. Dans cet exemple il y a trois types de taille : petit, moyen et grand mais pourrait en avoir plus.

Selon un autre mode de réalisation, c'est le module de gestion qui réalise cette recherche de similarité des deux signatures dans la base de données.

Le fournisseur AMP dans cet exemple envoie la dernière signature calculée par exemple avec un lien de la signature similaire identifiée au logiciel de poursuite pour l'informer que ces deux signatures sont potentiellement le même individu.

Le logiciel de poursuite LT transmet alors au module de gestion de caméra PM la signature de la cible à l'état nouveau, la signature similaire.

Le module de gestion de caméra PM peut ainsi rechercher la signature similaire à l'état de sortie reçue d'un logiciel de poursuite de la caméra X2 précédemment, faire la corrélation possible entre ces deux signatures et envoyer au réseau de neurones probable en mode apprentissage incrémentiel des données de prédiction.

Les données de prédictions d'apprentissage peuvent être:
- La classe de la cible, en l'occurrence piéton,
- La position de la cible à l'état de sortie, en l'occurrence par exemple des coordonnées dans l'image,
- La vitesse de la cible calculée à l'état de sortie, par exemple 5 km/h
- La direction de la cible calculée à l'état de sortie, par exemple une fonction d'une droite
- L'identification de la caméra précédente (c'est-à-dire celle de la cible à l'état de sortie), en l'occurrence X2,
- L'identification de la caméra nouvelle, en l'occurrence X2.

Ainsi le réseau de neurone de prédiction peut apprendre qu'il est probable qu'un piéton sortant du champ de vision de la caméra X2 à une certaine position et une certaine vitesse et direction sera visible ensuite sur la caméra X1.

Un flux d'image d'une seule caméra est représenté sur la figure 2, selon un exemple de procédé de prédiction d'une cible.

Le procédé comprend :
- une étape de filmage 1 par des caméras X,
- une étape de détection 2 par le détecteur D d'une cible et d'identification de sa classe et de sa position,
- une étape de mise à l'état nouveau N par le logiciel de poursuite LT (cible rentrant dans le champ de vision de la caméra),
- une étape d'envoi de l'image de la cible au fournisseur AMP,
- une étape d'identification 3 par le fournisseur AMP de la cible en lui attribuant une signature et en enregistrant une liste de ses attributs (genre, taille etc..),
- une étape de changement d'état de nouveau N à actif A par le logiciel de poursuite LT après réception de la signature du fournisseur AMP,
- une étape de changement d'état actif A à l'état de sortie S lorsque la position de la cible obtenue par le détecteur est dans une zone de sortie,
- une étape d'envoi au module de gestion de caméra PM de l'état de la cible à l'état de sortie ainsi que sa classe, sa signature, sa position, sa vitesse, sa direction,
- une étape de prédiction 4 par le réseau de neurones de prédiction de la caméra probable de sortie de la cible,
- une étape de réception par le module de gestion de caméra PM d'un ensemble de données de l'ensemble des logiciels de poursuite LT et de traitement 5 de la vidéo dont la cible poursuivie est demandée par un opérateur en ajoutant une liste de caméras probables par ordre de probabilité et par exemple le film de la caméra la plus probable,
- une étape d'affichage par un organe d'interface homme machine 6 de la vidéo en direct comprenant l'identification de la caméra probable,
- une étape d'événement 7 dans laquelle la cible demandée apparait dans un film d'une caméra identifiée à l'état nouveau,
- une étape de vérification de prédiction 8 vérifiant que l'identification de la caméra, dans laquelle la cible réapparait à l'état nouveau, est nommée dans la liste de prédiction de caméras,
- si la caméra n'est pas dans la liste, le module de changement d'état PM réalise une étape d'apprentissage 9 au réseau de neurones en lui fournissant les données de prédictions d'apprentissage.

Le réseau de neurones artificiel de prédiction peut ainsi apprendre la topologie de caméra de vidéosurveillance X et proposer une caméra ou une liste de caméra dont la cible va apparaître probablement lorsqu'un opérateur envoie une requête de suivi d'une cible.

Par exemple, le réseau de neurones artificiel de prédiction CP peut apprendre continuellement ou de temps en temps. Ainsi en cas d'ajout ou de dégradation de caméra, le réseau de neurones artificiel peut proposer la ou les caméras X probables avec par exemple un pourcentage des caméras suivantes sur la vidéo visionnant la cible en direct à l'état de sortie. Selon un autre exemple, il peut ajouter les vidéos en direct en plus petite taille sur la vidéo montrant la cible à l'état de sortie jusqu'à ce que celle-ci passe à l'état de disparition.

La figure 3 représente un cycle d'état d'une cible dans un champ de vision d'une caméra de vidéosurveillance X.

Une cible identifiée par le logiciel de poursuite LT, en l'occurrence rentrant dans un champ de vision de la caméra X1, passe à l'état nouveau et une image de la vidéo est envoyée au détecteur qui découpe une image de la cible, identifie une classe ainsi que la position de la cible, ensuite l'image découpée est envoyée au fournisseur AMP, qui renvoie au logiciel de poursuite LT une signature calculée.

Le logiciel de poursuite LT passe la cible à l'état actif A et envoie les images de la vidéo au détecteur qui lui renvoie la position de la cible jusqu'à ce que la cible ait une position dans une zone de sortie du champ de vision de la caméra X1 dans laquelle le logiciel de poursuite LT passe la cible à l'état S. Si la cible retourne dans un champ actif du champ de vision, par exemple la cible fait demi-tour et retourne vers le centre du champ de vision de la caméra, le logiciel de poursuite repasse la cible à l'état actif A jusqu'à ce que la cible retourne dans une zone de sortie du champ de vision de la caméra X1. Enfin, lorsque la cible sort du champ de vision de la caméra X1, il passe la cible à l'état de disparition D.

Du fait, que le logiciel de poursuite LT connait les différentes positions de la cible dans le champ de vision de la caméra, il peut en calculer la vitesse ainsi que la direction.

Selon un mode de réalisation, le logiciel de poursuite LT envoie au module de gestion de caméras PM des données d'informations de la cible à chaque changement d'état, c'est-à-dire en l'occurrence la vitesse, la position, la direction, la signature, la classe ainsi que l'état.

Le module de gestion de caméras Pm reçoit donc ces données d'un ensemble de logiciels de poursuite LT. C'est ainsi, que le module de gestion peut identifier le passage d'une cible, par le biais des signatures, d'un champ de vision d'une caméra à un champ de vision d'une autre caméra pour pouvoir transmettre au réseau de neurones artificiel de prédiction pour son apprentissage incrémentiel.

Le module de gestion de caméras de surveillance PM peut aussi recevoir, d'un ordinateur 6 utilisé par un opérateur, une requête de suivi d'une cible par exemple l'opérateur clique sur une cible de la vidéo X1.

La cible étant déjà identifiée, est suivie par le logiciel de poursuite LT et lorsque la cible passe à l'état de sortie, le module de gestion PM envoie au réseau de neurones de prédiction CP, l'identification de la caméra, la classe de la cible, la position de la cible à l'état de sortie, la vitesse de la cible calculée à l'état de sortie, la direction de la cible calculée à l'état de sortie. Le réseau de neurones transmet une liste d'identifications de caméra probable et en l'occurrence leur probabilité.

Le réseau de neurones affiche donc sur la vidéo, la liste des caméras ayant une grande probabilité, par exemple les 5 caméras les plus probables.

Le module de gestion de caméras de surveillance PM peut aussi ajouter sur une zone de la vidéo dont la cible est identifiée à l'état de sortie, par exemple en haut à gauche, une vidéo filmée par la caméra la plus probable identifiée par le réseau de neurones artificiel de prédiction.

Selon un mode de réalisation, le module de gestion de caméras de surveillance PM peut envoyer une liste de Nœud de caméra de surveillance ainsi que les poids des chemins entre les caméras calculées par classe.

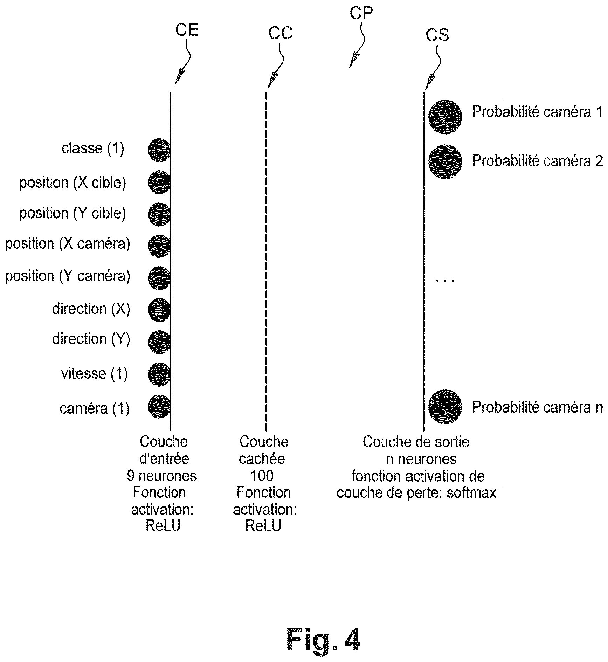

La figure 4 représente un schéma de principe d'un exemple du réseau de neurone artificiel de prédiction CP. Le réseau de neurone artificiel de prédiction CP comprend trois couches dans cet exemple. Le réseau de neurone artificiel de prédiction CP comprend une couche d'entrée CE comprenant des neurones ayant une fonction d'activation par exemple de type unité linéaire rectifiée appelée aussi « ReLU » acronyme de l'anglais (Rectifed Linear Unit). En l'occurrence, la couche d'entrée CE comprend neuf neurones, dont un neurone concernant la classe, quatre neurones concernant la position de la cible, un neurone pour la vitesse et un neurone pour l'identification de la caméra soit neuf variables.

Les quatre neurones de position de la cible est, en l'occurrence, un neurone de position X de la cible selon un axe X dans l'image, un neurone de position Y de la cible selon un axe Y dans l'image, un neurone de position X de la caméra selon un axe mobile pour la caméra filmant la cible, c'est à dire produisant l'image dans laquelle la cible est détectée et un neurone de position Y de la caméra selon un axe mobile Y de la caméra.

Bien entendu, la couche d'entrée CE pourrait comporter plus ou moins que neuf neurones. Par exemple, un neurone de plus pourrait être un neurone de position Z de la caméra mobile selon l'axe Z de la caméra . Selon un autre exemple le nombre peut être de huit neurones en ayant une position Z de la cible calculée par chaque caméra et les deux entrées de neurones positions de caméras X et Y n'existerait pas.

Le réseau de neurone artificiel de prédiction CP comprend en outre une couche cachée CC comprenant des neurones ayant une fonction d'activation par exemple de type unité linéaire rectifiée. En l'occurrence dans cet exemple, le réseau de neurone artificiel de prédiction CP comprend cent neurones. Le réseau de neurone de prédiction CP pourrait comporter plus qu'une couche cachée.

Le réseau neurone artificiel de prédiction CP comprend dans cet exemple, enfin une couche de sortie CS comprenant un neurone par probabilité de caméra identifié ayant les plus grandes probabilités d'apparition de la cible. En l'occurrence, la couche de sortie CS comprend n neurone ayant une fonction d'activation de couche de perte, appelée aussi Softmax, pour prédire la caméra. Par exemple, la couche de sortie CS comprend cinq neurones de sortie pour cinq probabilités de cinq caméras de surveillance identifiées ayant les plus grandes probabilités d'apparition de la cible. Les neurones par probabilité de caméra identifié ayant les plus grandes probabilités d'apparition de la cible forme la liste d'identifications de caméras par probabilité.

Selon un mode de réalisation, le réseau neurone artificiel de prédiction CP peut donner une identification d'une caméra probable dont la cible sera probablement identifiée en fonction d'une séquence des caméras précédentes identifiées dans le neurone d'identification de la couche d'entrée. Par exemple la liste d'identifications de caméras par probabilité est obtenue en fonction de cette séquence.

Bien entendu, l'invention n'est pas limitée aux modes de réalisation qui viennent d'être décrit.

La présente invention a été décrite et illustrée dans la présente description détaillée et dans les figures des dessins annexés, dans des formes de réalisation possibles. La présente invention ne se limite pas, toutefois, aux formes de réalisation présentées. D'autres variantes et modes de réalisation peuvent être déduits et mis en œuvre par la personne du métier à la lecture de la présente description et des dessins annexés, dans la mesure où ils relèvent de la portée des revendications annexées.

Dans les revendications, le terme "comprendre" ou "comporter" n'exclut pas d'autres éléments ou d'autres étapes. Les différentes caractéristiques présentées et/ou revendiquées peuvent être avantageusement combinées. Leur présence dans la description ou dans des revendications dépendantes différentes, n'excluent pas cette possibilité. Les signes de référence ne sauraient être compris comme limitant la portée de l'invention.

## Revendications

1. Système de surveillance d'au moins un site comprenant des caméras de vidéosurveillances, le système de surveillance comprenant :
• au moins un module de gestion de caméras de surveillance ayant :
- au moins une entrée pour recevoir des données :
i d'au moins une identification d'une des caméras réalisant une vidéo sur une zone surveillée du site,
ii d'au moins une signature correspondant à une cible mobile détectée sur la vidéo,
iii d'un état de la cible dans la zone surveillée par la caméra, étant parmi:
(a) un état d'entrée dans lequel la cible est rentrée sur le champ de vision de la caméra,
(b) un état de sortie dans lequel la cible est dans une extrémité du champ de vision,
(c) un état de disparition dans lequel la cible est sortie du champ de vision,
iv de positionnement de la cible dans la zone surveillée,
v une identification d'une caméra probable,
- et une sortie pour envoyer des données :
i d'identification de la caméra dans laquelle une cible a été détectée,
ii de positionnement de la cible à l'état de sortie,
iii des données de direction de la cible,
iv l'identification d'une caméra dans laquelle la cible a réapparu dans une zone surveillée par la caméra après la disparition de la cible
v l'au moins une identification de caméra probable,
• un réseau de neurones artificiel de prédiction de localisation d'une cible dans une zone surveillée par une caméra, comprenant :
- une entrée d'acquisition d'information de cible connectée au module de gestion de caméra de surveillance, comprenant des données pour prédiction comprenant des données :
i d'identification de la caméra dans laquelle une cible a été détectée,
ii de positionnement de la cible à l'état de sortie,
iii de direction à l'état de sortie reçue ou calculée par le module de gestion,
- une sortie d'au moins une identification d'une caméra probable dans laquelle la cible sera probablement identifiée transmise au module de gestion de caméras pour la transmettre à un organe comprenant un écran,
- dans lequel le module de gestion de caméras transmet au réseau de neurones artificiel de prédiction en mode apprentissage automatique les données pour prédictions ainsi que l'identification d'une caméra dans laquelle la cible a réapparu dans une zone surveillée par la caméra après la disparition de la cible .

2. Système de surveillance selon la revendication précédente, dans lequel le module de gestion de caméras de surveillance reçoit en outre des données de vitesse de la cible et en ce que les données de cible pour prédiction envoyées au réseau de neurones artificiel de prédiction comprennent en outre ces données de direction à l'état de sortie.

3. Système de surveillance selon l'une quelconque des revendications précédentes, dans lequel le module de gestion de caméras de surveillance reçoit en outre des données de classe de la cible et en ce que les données de cible pour prédiction envoyées au réseau de neurones artificiel de prédiction comprennent en outre ces données de classe à l'état de sortie, la classe de la cible pouvant être un piéton, un deux roues, un véhicule à quatre roues ou autre.

4. Système de surveillance selon l'une quelconque des revendications précédentes, comprenant en outre :
• un ensemble de logiciel de poursuite de cible par caméra de surveillance permettant de :
- suivre la cible et en déduire la direction et la vitesse,
- de créer l'état de la cible
• un détecteur permettant
- d'extraire une image de cible de la vidéo,
- de réaliser une reconnaissance d'image pour attribuer la classe de la cible,
- d'envoyer à l'ensemble de logiciel de poursuite l'image extraite ainsi que sa classe,
• un fournisseur de modèle d'apparence permettant :
- de recevoir l'image extraite par le détecteur ainsi que sa classe,
- de donner une signature à la cible,
- d'identifier un certain nombre de caractéristiques de la cible tel que la couleur etc...
- de stocker dans une mémoire les caractéristiques et la signature de la cible,
- d'envoyer à l'ensemble de logiciel de poursuite la signature correspondant à l'image reçue,
et en ce que l'ensemble de logiciel de poursuite transmet au module de gestion de caméras de surveillance la signature, la vitesse, la direction, la classe, l'état de la cible.

5. Système de surveillance selon l'une quelconque des revendications précédentes, dans lequel le module de gestion de caméras de surveillance est apte à recevoir une requête de demande de prédiction d'une cible comprenant une signature, et en ce que le réseau de neurones artificiel de prédiction peut envoyer à sa sortie une liste d'identifications de caméras par probabilité et en ce que le module de gestion de caméras de surveillance est apte en outre à envoyer à la machine d'interface l'identification de la caméra dont la cible est à l'état actif et une liste ordonnée par probabilité des identifications de caméras probable possible.

6. Système de surveillance selon l'une quelconque des revendications précédentes, dans lequel le module de gestion de caméras de surveillance est apte à ajouter sur une zone de la vidéo dont la cible est identifiée à l'état actif ou à l'état de sortie, une vidéo filmée par une caméra probable identifiée par le réseau de neurones artificiel de prédiction.

7. Système de surveillance selon l'une quelconque des revendications précédentes, dans lequel le module de gestion de caméras de surveillance est apte à envoyer une liste de Nœud de caméra de surveillance ainsi que le chemin de la cible de la première caméra ayant identifiée la cible à la caméra la plus probable de la cible et par exemple une autre caractéristique telle que la classe, les poids des chemins entre les caméras calculées par classe.

8. Procédé de suivi d'une cible utilisant un système de surveillance selon l'une quelconque des revendications précédentes, dans lequel le procédé de suivi comprend :
• une étape de requête de suivi d'une cible sur une image,
• une étape de reconnaissance d'une similarité de signature de la cible dans une base de données de signature,
• une étape de suivie de la cible sur une vidéo réalisée par une caméra de surveillance filmant une zone du site,
• une étape d'envoi de prédiction dans laquelle le module de gestion envoie au réseau de neurones artificiel de prédiction des données de cible dont au moins la position de la cible lorsque celle-ci se trouve dans une zone de la zone filmée par la caméra de surveillance correspondant à un état de sortie,
• une étape de réception du réseau de neurones artificiel de prédiction d'une identification d'une caméra probable dans laquelle la cible peut apparaître si elle disparait du champ de vision de la caméra identifiée
• une étape d'ajout sur la vidéo de la caméra identifiée de l'identification de la caméra probable.
• une étape d'envoi de visionnage, à l'organe comprenant un écran, de la vidéo ainsi que l'identification de la caméra probable.

## Patentansprüche

1. Überwachungssystem für mindestens einen Standort, umfassend Videoüberwachungskameras, wobei das Überwachungssystem umfasst:
• mindestens ein Überwachungskamera-Verwaltungsmodul mit:
- mindestens einem Eingang zum Empfangen von Daten:
i mindestens einer Identifikation einer der Kameras, die ein Video von einer überwachten Zone des Standorts aufnehmen,
ii mindestens einer Signatur, die einem in dem Video erkannten beweglichen Ziel entspricht,
iii eines Zustands des Ziels in der von der Kamera überwachten Zone, darunter:
(a) einen Eingangszustand, in dem das Ziel in das Sichtfeld der Kamera eingetreten ist,
(b) einen Ausgangszustand, in dem sich das Ziel an einem Ende des Sichtfelds befindet,
(c) einen Zustand des Verschwindens, in dem das Ziel das Sichtfeld verlassen hat,
iv der Positionierung des Ziels in der überwachten Zone,
v einer Identifikation einer wahrscheinlichen Kamera,
- und einem Ausgang zum Senden von Daten:
i der Identifikation der Kamera, bei der ein Ziel erkannt wurde,
ii der Positionierung des Ziels im Ausgangszustand,
iii der Richtungsdaten des Ziels,
iv der Identifikation einer Kamera, bei der das Ziel in einer von der Kamera überwachten Zone nach dem Verschwinden des Ziels erneut erschien
v der mindestens einen Identifikation der wahrscheinlichen Kamera,
• ein künstliches neuronales Vorhersagenetzwerk zum Orten eines Ziels in einer von einer Kamera überwachten Zone, umfassend:
- einen mit dem Überwachungskamera-Verwaltungsmodul verbundenen Eingang für eine Zielinformationserfassung, umfassend Vorhersagedaten, umfassend Daten:
i der Identifikation der Kamera, bei der ein Ziel erkannt wurde,
ii der Positionierung des Ziels im Ausgangszustand,
iii der Richtung in dem vom Verwaltungsmodul empfangenen oder berechneten Ausgangszustand,
- einen Ausgang mindestens einer Identifikation einer wahrscheinlichen Kamera, bei der das Ziel wahrscheinlich identifiziert wird, das an das Kameraverwaltungsmodul übertragen wird, um es an ein Gerät umfassend einen Bildschirm zu übertragen,
- wobei das Kameraverwaltungsmodul an das künstliche neuronale Vorhersagenetzwerk im automatischen Lernmodus die Daten für Vorhersagen sowie die Identifikation einer Kamera überträgt, bei der das Ziel in einer von der Kamera überwachten Zone nach dem Verschwinden des Ziels erneut erschien.

2. Überwachungssystem nach dem vorstehenden Anspruch, wobei das Überwachungskamera-Verwaltungsmodul ferner Geschwindigkeitsdaten des Ziels empfängt und wobei die an das künstliche neuronale Vorhersagenetzwerk für die Vorhersage gesendeten Zieldaten ferner diese Richtungsdaten im Ausgangszustand umfassen.

3. Überwachungssystem nach einem der vorstehenden Ansprüche, wobei das Überwachungskamera-Verwaltungsmodul ferner Klassendaten des Ziels empfängt und wobei die an das künstliche neuronale Vorhersagenetzwerk für die Vorhersage gesendeten Zieldaten ferner diese Klassendaten im Ausgangszustand umfassen, wobei die Klasse des Ziels ein Fußgänger, ein Zweiradfahrzeug, ein Vierradfahrzeug oder etwas anderes sein kann.

4. Überwachungssystem nach einem der vorstehenden Ansprüche, ferner umfassend:
• ein Softwarepaket für die Verfolgung des Ziels mit einer Überwachungskamera, die Folgendes ermöglicht:
- das Ziel zu verfolgen und dessen Richtung und Geschwindigkeit abzuleiten,
- den Zustand des Ziels zu erstellen
• einen Detektor, der Folgendes ermöglicht:
- ein Zielbild aus dem Video zu extrahieren,
- eine Bildwiedererkennung zum Zuordnen der Zielklasse durchzuführen,
- das extrahierte Bild sowie dessen Klasse an das Verfolgungs-Softwarepaket zu senden,
• einen Anbieter von Erscheinungsbildmodellen, die Folgendes ermöglichen:
- das vom Detektor extrahierte Bild sowie dessen Klasse zu empfangen,
- das Ziel mit einer Signatur zu versehen,
- eine bestimmte Anzahl von Merkmalen des Ziels wie die Farbe usw. zu identifizieren
- die Merkmale und die Signatur des Ziels in einem Speicher zu speichern,
- die dem empfangenen Bild entsprechende Signatur an das Verfolgungs-Softwarepaket zu senden,
und wobei das Verfolgungs-Softwarepaket Signatur, Geschwindigkeit, Richtung, Klasse und Zustand des Ziels an das Überwachungskamera-Verwaltungsmodul überträgt.

5. Überwachungssystem nach einem der vorstehenden Ansprüche, wobei das Überwachungskamera-Verwaltungsmodul in der Lage ist, eine Anforderungssuchanfrage für die Vorhersage eines Ziels, umfassend eine Signatur, zu empfangen, und wobei das künstliche neuronale Vorhersagenetzwerk an seinen Ausgang eine Liste von nach Wahrscheinlichkeit sortierten Kameraidentifikationen senden kann, und wobei das Überwachungskamera-Verwaltungsmodul ferner in der Lage ist, die Identifikation der Kamera, deren Ziel im aktiven Zustand ist, sowie eine nach Wahrscheinlichkeit der wahrscheinlichen möglichen Kameraidentifikationen sortierte Liste an die Schnittstellen-Engine zu senden.

6. Überwachungssystem nach einem der vorstehenden Ansprüche, wobei das Überwachungskamera-Verwaltungsmodul in der Lage ist, einer Zone des Videos, dessen Ziel im aktiven Zustand oder im Ausgangszustand identifiziert wird, ein Video hinzuzufügen, das von einer wahrscheinlichen Kamera gefilmt wurde, die durch das künstliche neuronale Vorhersagenetzwerk identifiziert wurde.

7. Überwachungssystem nach einem der vorstehenden Ansprüche, wobei das Überwachungskamera-Verwaltungsmodul in der Lage ist, eine Liste von Überwachungskameraknoten sowie den Pfad des Ziels von der ersten Kamera, die das Ziel identifiziert hat, bis zu der wahrscheinlichsten Kamera des Ziels und beispielsweise ein weiteres Merkmal wie die Klasse, die Gewichtungen der Pfade zwischen den nach Klasse berechneten Kameras zu senden.

8. Verfahren zum Verfolgen eines Ziels unter Verwendung eines Überwachungssystems nach einem der vorstehenden Ansprüche, wobei das Verfolgungsverfahren umfasst:
• einen Schritt zum Anfordern der Verfolgung eines Ziels auf einem Bild,
• einen Schritt zum Wiedererkennen einer Ähnlichkeit der Signatur des Ziels in einer Signaturdatenbank,
• einen Schritt zu Verfolgen des Ziels auf einem Video, das von einer Überwachungskamera erstellt wird, die eine Zone des Standorts filmt,
• einen Vorhersage-Sendeschritt, bei dem das Verwaltungsmodul Zieldaten an das künstliche neuronale Vorhersagenetzwerk sendet, die mindestens die Position des Ziels umfassen, wenn sich dieses in einer Zone der von der Überwachungskamera gefilmten Zone befindet, die einem Ausgangszustand entspricht,
• einen Schritt zum Empfangen einer Identifikation einer wahrscheinlichen Kamera durch das künstliche neuronale Vorhersagenetzwerk, bei der das Ziel erscheinen kann, wenn es aus dem Sichtfeld der identifizierten Kamera verschwindet
• einen Schritt zum Hinzufügen der Identifikation der wahrscheinlichen Kamera zum Video der identifizierten Kamera.
• einen Schritt zum Senden der Videoaufzeichnung des Videos sowie der Identifikation der wahrscheinlichen Kamera an das Gerät, das einen Bildschirm umfasst.

## Claims

1. Surveillance system for at least one site comprising video surveillance cameras, the surveillance system comprising:
• at least one surveillance camera management module having:
- at least one input for receiving data:
i of at least one identification of one of the cameras recording video in a monitored zone of the site,
ii of at least one signature corresponding to a moving target detected on the video,
iii of a state of the target in the zone monitored by the camera, being among:
(a) an input state in which the target has entered the field of view of the camera,
(b) an output state in which the target is at one end of the field of view,
(c) a disappearance state in which the target has left the field of view,
iv of positioning of the target in the monitored zone,
v identification of a likely camera,
- and an output for sending data:
i of identification of the camera in which a target has been detected,
ii of positioning of the target in the output state,
iii direction data of the target,
iv identification of a camera in which the target has reappeared in a zone monitored by the camera after the disappearance of the target
v the at least one identification of the likely camera,
• an artificial neural network for predicting the location of a target in a zone monitored by a camera, comprising:
- a target information acquisition input connected to the surveillance camera management module, comprising data for prediction including data:
i of identification of the camera in which a target has been detected,
ii of positioning of the target in the output state,
iii of direction in the output state received or calculated by the management module,
- an output of at least one identification of a likely camera in which the target will probably be identified transmitted to the camera management module for transmission to a unit comprising a screen,
- wherein the camera management module transmits to the prediction artificial neural network in automatic learning mode the data for predictions as well as the identification of a camera in which the target has reappeared in a zone monitored by the camera after the disappearance of the target.

2. Surveillance system according to the preceding claim, wherein the surveillance camera management module additionally receives speed data of the target and the target data for prediction sent to the prediction artificial neural network additionally comprise these direction data in the output state.

3. Surveillance system according to either of the preceding claims, wherein the surveillance camera management module additionally receives class data of the target and the target data for prediction sent to the prediction artificial neural network additionally comprise these class data in the output state, the target class can be a pedestrian, a two-wheeler, a four-wheeler or the like.

4. Surveillance system according to any of the preceding claims, further comprising:
• a software package for target tracking by surveillance camera allowing:
- the target to be followed and its direction and speed to be deduced,
- the state of the target to be created
• a detector allowing
- a target image to be extracted from the video,
- image recognition to be performed to assign the class of the target,
- the extracted image and its class to be sent to the tracking software package,
• an appearance model provider allowing:
- the image extracted by the detector and its class to be received,
- the target to be given a signature,
- a number of characteristics of the target, such as color etc..., to be identified
- the characteristics and signature of the target to be stored in a memory,
- the signature corresponding to the image received to be sent to the tracking software package,
and the tracking software package transmits the signature, speed, direction, class and state of the target to the surveillance camera management module.

5. Surveillance system according to any of the preceding claims, wherein the surveillance camera management module is able to receive a request for prediction of a target comprising a signature, and the prediction artificial neural network can send at its output a list of camera identifications by probability and the surveillance camera management module is further able to send to the interface machine the identification of the camera of which the target is in the active state and a probability-ordered list of possible likely camera identifications.

6. Surveillance system according to any of the preceding claims, wherein the surveillance camera management module is able to add, to a zone of the video of which the target is identified in the active state or in the output state, a video filmed by a likely camera identified by the prediction artificial neural network.

7. Surveillance system according to any of the preceding claims, wherein the surveillance camera management module is able to send a list of surveillance camera nodes as well as the path of the target from the first camera that identified the target to the most likely camera of the target and, for example, another characteristic such as class, path weights between cameras calculated by class.

8. Method of tracking a target using a surveillance system according to any of the preceding claims, wherein the tracking method comprises:
• a step of requesting the tracking of a target on an image,
• a step of recognizing a similarity of the target signature in a signature database,
• a step of tracking the target on a video produced by a surveillance camera filming a zone of the site,
• a prediction sending step in which the management module sends target data to the prediction artificial neural network, including at least the position of the target when said target is in a zone of the zone filmed by the surveillance camera corresponding to an output state,
• a step of receiving from the prediction artificial neural network an identification of a likely camera in which the target may appear if it disappears from the field of view of the identified camera
• a step of adding the identification of the likely camera to the video from the identified camera.
• a step of sending the video and the identification of the likely camera to the unit comprising a screen.
